# EUROPEAN PATENT SPECIFICATION

(11) **EP 0 644 504 B1**
(45) Date of publication and mention of the grant of the patent: **16.08.2000**
(21) Application number: 94114203.6
(22) Date of filing: 09.09.1994
(51) Int. Cl.: G06K 7/10

(54) **Scanner with multiple scan units**
Scanner mit mehreren Abtasteinheiten
Scanner avec plusieurs unités de balayage

(30) Priority: 14.09.1993 US 127898; 30.06.1994 US 269171
(43) Date of publication of application: 22.03.1995
(60) Divisional application: 99116641.4
(73) Proprietor: SYMBOL TECHNOLOGIES, INC., Bohemia New York 11716 (US)
(72) Inventor: Katz, Joseph, Stony Brook, NY 11790 (US); Swartz, Jerome, Old Field, NY 11733 (US); Li, Yajun, Oakdale, NY 11769 (US)
(74) Representative: Wagner, Karl H., Dipl.-Ing.

(56) References cited:
- EP-A- 0 338 376
- EP-A- 0 360 250
- EP-A- 0 488 177
- EP-A- 0 541 065
- WO-A-90/10885
- US-A- 4 939 355
- US-A- 5 019 714

## Description

### Technical Field

The present invention relates to optical scanners for reading optically encoded indicia, such as bar codes or matrix symbols. In particular, this invention relates to a system for scanning indicia on the surfaces of items moving through a Predetermined space or opening, e.g. at a point along a conveyor belt or a check out counter, wherein the system includes multiple scan units each having multiple light emitters and optionally utilizing a charge coupled or other solid state imaging device such as a sensor array.

### Background Art

Optical readers, such as bar code readers, are now quite common. Typically, a bar code comprises a series of encoded symbols, and each symbol consists of a series of light and dark regions, typically in the form of rectangles. The widths of the dark regions, the bars, and/or the widths of the light spaces between the bars indicate the encoded information. A bar code reader illuminates the code and senses light reflected from the code to detect the widths and spacings of the code symbols and derive the encoded data.

Bar code reading type data input systems improve the efficiency and accuracy of data input for a wide variety of applications. The ease of data input in such systems facilitates more frequent and detailed data input, for example to provide efficient inventories, tracking of work in progress, etc. Bar code readers are also quite common in point of sale terminals or checkout stands. To achieve these advantages, however, users or employees must be willing to consistently use the bar code readers. The readers therefore must be easy and convenient to operate.

A variety of optical reading devices are known. One particularly advantageous type of reader is an optical scanner which scans a beam of light, such as a laser beam, across the symbols. Laser scanner systems and components of the type exemplified by U.S. Patent Nos. 4,251,798; 4,369,361; 4,387,297; 4,409,470; 4,760,248; 4,896,026 all of which are owned by the assignee of the instant invention. Such systems and components have generally been designed to read indicia having parts of different light reflectivity, e.g., bar code symbols, particularly of the Universal Product Code (UPC) type, at a certain working or reading distance from a hand-held or stationary scanner.

More recently, new symbology types have been developed which utilize symbols comprised of a matrix symbol with geometric shapes forming a coded symbol. The matrix symbol may utilize square, hexagonal, polygonal as well as other shapes to form the encoded label. Exemplary of such labels is that shown in prior art Figure 19A. The coding may be in accordance with such trademarked symbologies as "VERICODE" or "DATACODE" or "UPSCODE". These trademarked symbologies are discussed in exemplary U.S. Patent Nos. 4,924,078, 4,939,154, 4,998,010, 4,896,029, 4,874,936 and 5,276,315.

In a typical optical scanner system, a light source such as a laser generates a light beam which is optically modified to form a beam spot of a certain size at the working distance and is directed by optical components along a light path toward a symbol located in the vicinity of the working distance for reflection from the symbol. An optical sensor or photodetector detects light of variable intensity reflected off the symbol and generates electrical signals indicative of the detected light. A scanning component is situated in the light path. The scanning component may either sweep the beam spot across the symbol and trace a scan line across and past the symbol, or scan the field of view of the photodetector, or do both.

The light source in a laser scanner bar code reader is typically a gas laser or semiconductor laser. The use of semiconductor devices as the light source is especially desirable because of their small size, low cost and low voltage requirements. The laser beam is optically modified, typically by an optical assembly, to form a beam spot of a certain size at the target distance. It is preferred that the cross section of the beam spot at the target distance be approximately the same as the minimum width between regions of different light reflectivity, i.e., the bars and spaces of the symbol. Bar code readers have been proposed with two light sources to produce two light beams.

The symbols are formed from elements with a variety of possible shapes. The specific arrangement of elements defines the character represented according to a set of rules and definitions specified by the code or "symbology" used. The selection and relative arrangement of the shapes is determined by the type of coding used. The number of characters (represented by the symbol) is referred to as the density of the symbol. To encode the desired sequence of the characters, a collection of element arrangements are concatenated together to form the complete symbol, with each character of the message being represented by its own element or corresponding group of elements. In some symbologies, a unique "start" and "stop" character is used to indicate when the bar code begins and ends. Others have a symbol acquisition portion to help locate and target on the symbol. A number of different bar code symbologies exist, these symbologies include UPC/EAN, Code 39, Code 128, Codeabar, and Interleaved 2 of 5 etc.

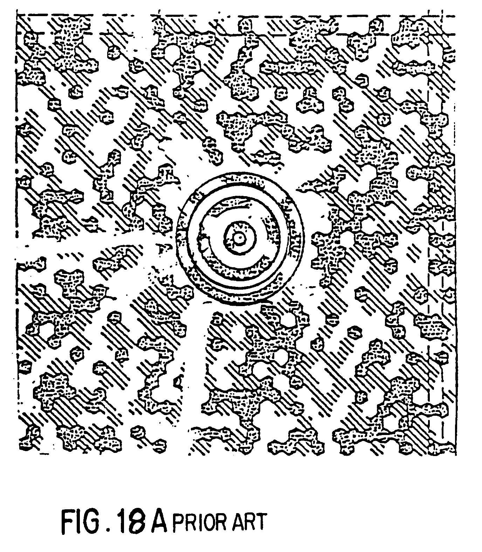

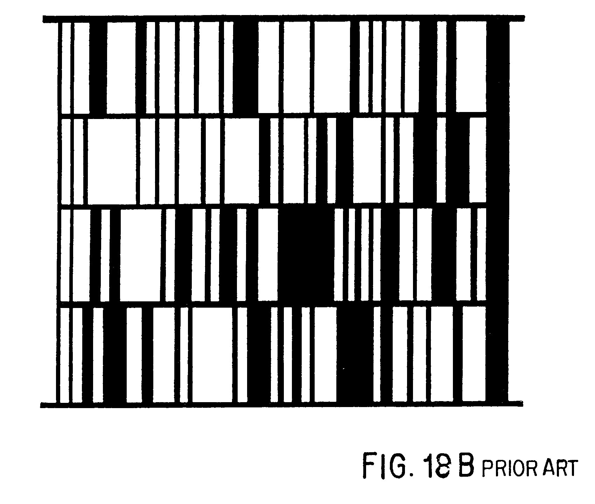

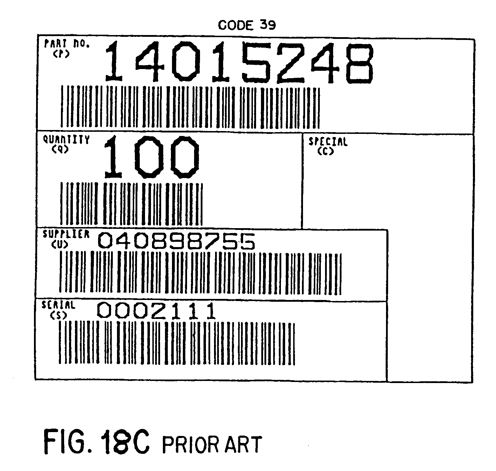

In order to increase the amount of data that can be represented or stored on a given amount of surface area, several new bar code symbologies have recently been developed. One of these new code standards, Code 49, introduces a "two dimensional" concept for stacking rows of characters vertically instead of extending the bars horizontally. That is, there are several rows of bar and space patterns, instead of only one row. The structure of Code 49 is described in U.S. Patent No. 4,794,239. Another two-dimensional symbology, known as "PDF417", is described in U.S. Patent No. 5,304,786. Still other symbologies have been developed in which the symbol is comprised of a matrix array made up of hexagonal, square, polygonal and/or other geometric shapes. Prior art Fig. 18A-C depict known matrix and other type symbols. Such symbols are further described in, for example, U.S. Patents 5,276,315 and 4,794,239. Such matrix symbols may include Vericode™, Datacode™ and UPSCODE™.

Bar code reading systems also include a sensor or photodetector which detects light reflected or scattered from the symbol. The photodetector or sensor is positioned in the scanner in an optical path so that it has a field of view sufficient to read the symbol. A portion of the light which is reflected or scattered off the symbol is detected and converted into an electrical signal. Electronic circuitry and software decodes the electrical signal into a digital representation of the data represented by the symbol that has been scanned. For example, the analog electrical signal generated by the photodetector is converted by a digitizer into a pulse or modulated digital signal, with the widths corresponding to the physical widths of the bars and spaces. Such a digitized signal is then decoded based on the specific symbology used by the symbol into a binary representation of the data encoded in the symbol, and subsequently to the alpha-numeric characters so represented.

The decoding process of known bar code reading systems usually works in the following way, the decoder receives the digital signal from the digitizer, and an algorithm, implemented in the software, attempts to decode the scan. If the scanned symbol is decoded successfully and completely, the decoding process terminates and an indicator of a successful read (such as a green light and/or an audible beep) is provided to the user. Otherwise, the decoder receives the next scan, performs another decode attempt on that scan, and so on, until a completely decoded scan is achieved or no more scans are available.

The signal is decoded according to the specific symbology into a binary representation of the data encoded in the symbol, and to the alpha-numeric characters so represented.

Moving-beam laser scanners are not the only type of optical instrument capable of reading symbols. Another type of reader is one which incorporates detectors based on charge coupled device (CCD) technology. In such prior art readers the sides of the detector are typically smaller than the symbol to be read because of the image reduction by the objective lens in front of the CCD. The entire symbol is flooded with light from a light source such as light emitting diodes (LED) in the scanning device, and each CCD cell is sequentially read out to determine the presence of an element or space.

The working range of CCD scanners is somewhat limited as compared to laser based scanners. Other features of CCD based scanners are set forth in U.S. Patent Application Serial Number 08/041,281 and U.S. Patent No. 5,210,398. These references are illustrative of the earlier technological techniques proposed for use in CCD type scanners to acquire and read two dimensional indicia.

Many uses of optical scanners involve scanning indicia on items moving along a conveyor belt or counter top, such as, scanning indicia on items to be purchased or automatically sorted. For example, the scan unit may be mounted on a gooseneck or other type stand so as to face downward toward the conveyor belt or counter. As an item moves along the conveyor or a consumer pushes the item along a counter top, the item passes beneath the scan unit. If the indicia is on the top surface of the item, the scan unit will optically scan the indicia. If the indicia is not currently on the surface of the item facing upward toward the scanner, however, the scan unit can not read the indicia. To permit scanning in such a case, an operator must manually turn the item so that the indicia faces towards the scan unit and is properly oriented to permit accurate scanning.

In another point of sale scanner embodiment utilizing a conveyor, a scan unit is at the end of the conveyor, typically below a transparent surface substantially planar with the top surface of the conveyor. When the item bearing the indicia reaches the end of the conveyor, the operator picks up the item, orients the item in a manner to permit scanning, and moves the item over the transparent plate to permit the scanner to scan the indicia. This is a labor intensive operation.

Other moving spot scanners have been incorporated in gun like housings. Such hand-held scanners require an operator to point the scanner at the bar code. Again, this is a labor intensive manual operation.

As can be seen from the above description, these prior art scanners still involve a substantial amount of manual handling of the items being scanned or of the scanners. U.S. Patent No. 4,939,355 to Rando et al. discloses an optical scanner for scanning a cubic item bearing a bar code on any one surface thereof. The Rando et al. system, however, requires a complicated set of mirrors for scanning the item from six different directions. Such a complicated mirror system may be difficult to align properly and easily knocked out of alignment, for example by the impact of the placement of a heavy object on the scanner/conveyor platform.

US-A-5,019,714 relates to a laser scanner system for producing and projecting a multi-line scanning pattern into a space in which a bar code is to be brought. The system includes plural modular laser scanners, each producing a line scan pattern, but mounted with respect to one another so that the pattern of each scanner is projected into the space to conjoin to form the multi-line pattern. Each module is arranged to receive light reflected off the object to convert that light into electrical output signals indicative of the bars and spaces of the code. The system also include means for decoding the output signals and for providing the decoded signals to some peripheral device, e.g., an electronic cash register, or computer. In one embodiment the scanner is located adjacent a conveyor carrying bar coded items to form an automated check-out counter.

EP-A-0 360 250 discloses an optical reading apparatus for optically reading information of a symbol on an article, said optical reading apparatus being comprised of a bar code reading circuit for emitting laser beams to a bar code printed on a commodity passing in front of the bar code reading circuit and for reading the information of the bar code from the laser beams reflected at the bar code. In the optical reading apparatus, the bar code reading circuit includes a plurality of bar code readers which are put toward a path through which the commodity is moved so that read areas formed by the bar code readers contain the article moving path at different angles. A priority decision circuit is provided for applying a selective operation to the data read by the bar code readers

EP-A-0 338 376 relates to a method for optically sensing markings on objects at a plurality detecting stations, at which the objects are transported by means of a transport apparatus through the sensing area of an optical sensing apparatus. An object upon non-regular sensing is automatically returned and again transported through the sensing area of the optical sensing apparatus and then after a predetermined number of unsuccessful sensing attempts is automatically represented on a viewing device at a central station for identification of the object and/or a picture of the non-sensed object is stored in a memory.

EP-A-541 065 discloses several different embodiments of a simple, compact or miniature bar code scanner which is capable of scanning in any one of several modes.

US-A-4,939,355 relates to a point of sale bar code scanner, such as a grocery store check-out label scanner, that is attendant-free and completely automated in providing a listing or a total pricing of a customer's selected items. At each automated check-out, the customer initiates the process, places items on a conveyor, which carries each item separately through a scanner. The scanner reads all sides of each package, including the bottom of the package, since the bar code label could be located on any surface. Serial conveyors are used, and gates preferably control the advancement of items onto a conveyor which will carry the item through the scanning area, such that only one item can be scanned at a time. The conveyor in the scanning area includes a series of belt strips through which an upwardly scanned beam can read the package bottom. Various methods and systems are disclosed for handling "no reads". The customer signifies termination of the process at the appropriate time. In the process the customer receives some sort of identification tag.

It is an object of the present invention to provide a scanner which can scan two or more different planes or surfaces on which an indicia might appear, without resort to overly complex mirror systems. The scanner system is simple and robust, i.e. resistant to shock or impact damage, and does not require an operator to manually orient the item or the scanner to permit accurate scanning. Utilizing the described scanner, scanning occurs at the same time as or as part of other necessary operations.

It is a general object of this invention to provide a system for scanning indicia on surfaces of items moving through a predetermined space or opening.

It is a further object of the present invention to provide a system for scanning indicia on surfaces of items moving through a predetermined space or opening where the indicia form one or two-dimensional or more complex symbols.

It is a still further object of the present invention to provide such a system for use in scanning symbols comprised of a matrix symbol of geometric shapes.

Additional objects, advantages and novel features of the present invention will become apparent to those skilled in the art from this disclosure, including the following detail description, as well as by practice of the invention. While the invention is described below with reference to preferred embodiments, it should be understood that the invention is not limited thereto. Those of ordinary skill in the art having access to the teachings herein will recognize additional applications, modifications and embodiments in other fields, which are within the scope of the invention as disclosed and claimed herein and with respect to which the invention could be of significant utility.

### SUMMARY OF THE INVENTION

In accordance with the present invention, there is provided a system for scanning indicia as defined in claim 1.

Preferred embodiments of the invention may be gathered from the dependent claims.

### BRIEF DESCRIPTION OF THE DRAWINGS

Figure 1 graphically illustrates the concept of scanning two or more planes for the scanning of item surface orientations carrying an indicia.
Figure 2 depicts a tunnel scanner shown in combination with a conveyor belt system.
Figures 3A, 3B and 3C illustrate another embodiment of a tunnel scanner shown in combination with a conveyor belt.
Figure 4 depicts another embodiment of the tunnel scanner, shown in combination with a substantially transparent conveyor belt.
Figure 5 is a simplified block diagram of the components of an optical scanner.
Figure 6 illustrates a first embodiment of the scan unit used in the system of the present invention.
Figure 7 depicts a single scan line across the indicia to be read obtainable with the scan unit of Figure 6.
Figure 8 illustrates a second embodiment of the scan unit used in the system of the present invention.
Figure 9 depicts multiple scan lines across the indicia to be read obtainable with the scan unit of Figure 8.
Figure 10 depicts a laser or light emitting diode and a system for coupling light therefrom to a plurality of optical fibers for transmission to the scan units.
Figure 11 depicts a photodiode array coupled to return optical fibers to receive reflected light transmitted back from the scan units and a simplified block diagram of the associated signal processing circuitry.
Figure 12 illustrates a third embodiment of the scan unit having a CCD used in the system of the present invention.
Figure 13 illustrates an alternate mirror and scanning motor arrangement for producing a two-dimensional scanning pattern, for example omni-directional scanning.
Figure 14 shows an "inverted tunnel" scanner for scanning orthogonal side and bottom surfaces of items bearing indicia.
Figure 15 shows a tunnel scanner mounted around the top opening of a grocery cart or the like to scan indicia as a shopper drops items into the cart.
Figure 16 depicts a tunnel scanner mounted around the top opening of a well used for bagging groceries or other purchases as a clerk or shopper drops items being purchased into the bag.
Figures 17A and 17B respectively show tunnel/chute scanners associated with a truck or plane implementation where parcels entering and/or exiting the truck or plane can be scanned.
Figures 18A-C depict optically encoded symbols conforming to "UPSCODE" and other symbologies in accordance with the prior art.

### Best Mode for Carrying out the Invention

As used in this specification and in the appended claims, the term "indicia" broadly encompasses not only symbol patterns composed of one or two-dimensional alternating bars and spaces of various widths commonly refered to as bar code symbols, but also other one or two-dimensional graphic patterns such as those formed using a matrix symbol of geometric shapes, as well as alphanumeric characters. In general, the term "indicia" may apply to any type of pattern or symbol which may be recognized or identified by scanning a light beam and detecting reflected or scattered light as a representation of variations in light reflectivity at various points of the pattern or symbol.

The present invention utilizes a plurality of individual optical scan units. Each optical scan unit emits one or more moving spot scanning beams and receives light reflected from a surface of any item passing within the field of view and working range of the scan unit. The scan units are dispersed at various points around a scan space through which items will pass. The dispersed scan units all face generally inward to scan the items passing through the space. The precise positions, line of sight orientations and focusing of the scan units are chosen so that the scan units nominally scan a plurality of different planes. The nominal scanning planes are angularly displaced relative to each other, i.e. they may be orthogonal, parallel or at an obtuse or acute angle with respect to each other, as needed to facilitate scanning of particular items expected to have particular surface orientations. The scan units may be located quite close together or opposite each other for certain operations. This could result in interference between the light beams emitted by adjacent or opposite scan modules; however, such interference can be avoided by using various techniques which are well-known in the art.

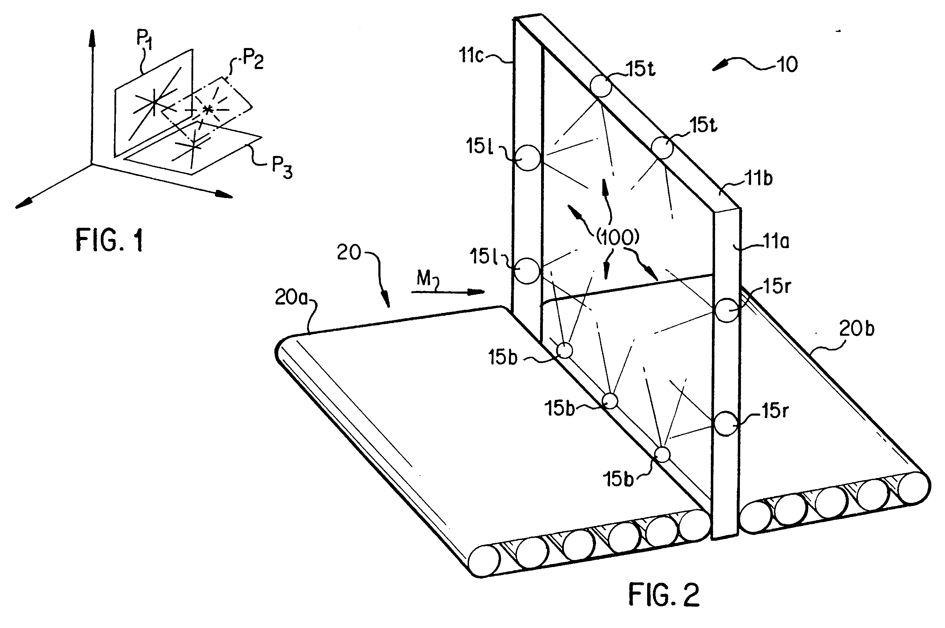

More specifically, Figure 1 graphically illustrates the concept of scanning two or more planes optimized for scanning of expected item surface orientations most likely to carry an indicia. For example, if for particular types of items it is most likely that the indicia will appear on the top or side of the item, and the top and side surfaces are approximately orthogonal, the scanning components would be oriented and focused to nominally scan two orthogonal planes such as P1 and P3.

Essentially, plane P1 is a vertical plane oriented to coincide with one side surface of the item, as the item moves past the scanner. The plane P3 is a horizontal plane oriented to coincide with a horizontal surface of the item, as the item moves past the scanner. In the illustrated example, the plane P3 represents a scanning of the bottom surface from below the item. Additional scan units to nominally scan other planes would be used if the indicia were most likely to appear on other surfaces of the items. For example, if the indicia is expected on the top of the item instead of or in addition to the bottom, one or more scan units would be located above the path of the items to scan another plane which would coincide with the top of the item as it passes the scanner system. If the expected items have angular surfaces, i.e. not orthogonal, at least one scan unit would be oriented and focused to produce a scanning plane such as P2 which is at the same angle as the expected indicia bearing surface. Also, the scan pattern may vary in orientation to allow for different angular orientations of the product and the indicia as it moves past the scanner, as illustrated by the multi-line pattern shown on each plane in Figure 1.

A single scanning unit nominally scans an optimal plane, such as one of the planes P1, P2 and P3 illustrated in Figure 1. If an indicium moves past a particular scan unit in the plane that unit scans, the scanning operation is optimal and most likely to produce a quick accurate reading. Moving spot scan units of the type used in present invention, however, have a substantial field of view and effective working range. The working range or depth of focus is defined as the distance from the unit within which the unit can still readily obtain accurate readings of indicia, and the field of view is the lateral angle scanned by the moving beam spot.

The working range relates directly to the focal characteristics of the scanner components and to the module size or resolution of the symbol. A reader typically will have a specified resolution, often expressed by the module size that is effectively detectable. The resolution of the reader is established by parameters of the emitter or the detector, by lenses or apertures associated with either the emitter or the detector by angle of beam inclination, by the threshold level of the digitizer, by programming in the decoder, or by a combination of two or more of these elements. Within the working range, accurate readings of symbols for a given symbol density can be obtained preferably by providing an effective spot size of the scan head for a given bar code density. For purposes of the present invention, the effect of the working range is that each unit can read indicia passing in its scanning plane, and can read indicia passing in front of or behind its scanning plane and tilted or skewed with respect to the beam so long as the indicia pass within the field of view and working range of the particular scan unit and the beam scans entirely across the indicia. Thus, although optimized for scanning a nominal plane, each scan unit can effectively scan indicia on surfaces corresponding to that plane and on surfaces oriented parallel to or at some range of angles with respect to the nominal scanning plane. Each scan unit positioned and oriented to have a different line of sight scans either a different nominal scanning plane or a different field of view within a given plane.

Several of the preferred embodiments scan at least two and preferably four different nominal scanning planes. The 'tunnel' scanner of Figure 2 effectively defines a three dimensional scanning space 100, bounded on four sides, through which conveyed objects move. The scan units 15, located along the top, sides and bottom, face into the space 100 and together scan at least four orthogonal scanning planes. Selected or additional scan units may be oriented to scan along different lines of sight which are angled with respect to the orthogonal planes and/or with respect to the direction of motion of the items, to scan additional relevant planes.

Figure 2 shows an embodiment of a tunnel scanner 10 wherein the tunnel scanner 10 is set up to scan items passing along a conveyor belt system 20. In the illustrated embodiment, the scan units 15 are located around all four sides of the scanning space 100, i.e. with scan units 15r on the right side, scan units 15t on the top, scan units 15l on the left and scan units 15b on the bottom.

As shown, the belt system 20 comprises two adjacent conveyors 20a and 20b. There is a small space between the two adjacent conveyors 20a and 20b. In operation, the first conveyor 20a will move items in the direction M to the gap and push the leading edge of the item out over the gap until it contacts the surface of the second conveyor 20b. The second conveyor 20b will then grab the leading edge of the item and pull the item the rest of the way across the gap and move the item onward in the direction M to the end of the conveyor system 20. A number of scan units 15b, positioned in the gap between the two adjacent conveyors 20a and 20b, are below the path of the items moved by the conveyor and face upward to scan the bottom surface of the items passing over the gap. A transparent plate (not shown) may cover the gap between the conveyors 20a, 20b, to bridge the gap and to protect the scan units 15b.

The tunnel scanner 10 includes an inverted, substantially U-shaped support bracket. As shown, the bracket includes two vertical sections 11a and 11c and a horizontal section 11b extending between the upper ends of the vertical sections. The lower ends of the vertical bracket sections 11a, 11c are positioned adjacent to the gap between the two separate conveyor belts 20a, 20b on opposite sides of the conveyor belt system 20. The belt system 20 and the tunnel scanner 10 together define the scanning space or opening 100 through which items on the conveyors pass.

Each section 11a, 11b, 11c of the support bracket supports a number of scan units 15r, 15t and 15l, respectively. In the embodiment shown, there are two scan units 15 on each bracket section and three along the bottom of the space 100 in the gap between the conveyors 20a, 20b, but there could be fewer or more scan units depending on the size of the opening, the field of view of the particular scan unit design and the expected size and shape of objects which the scanner system 10 will scan.

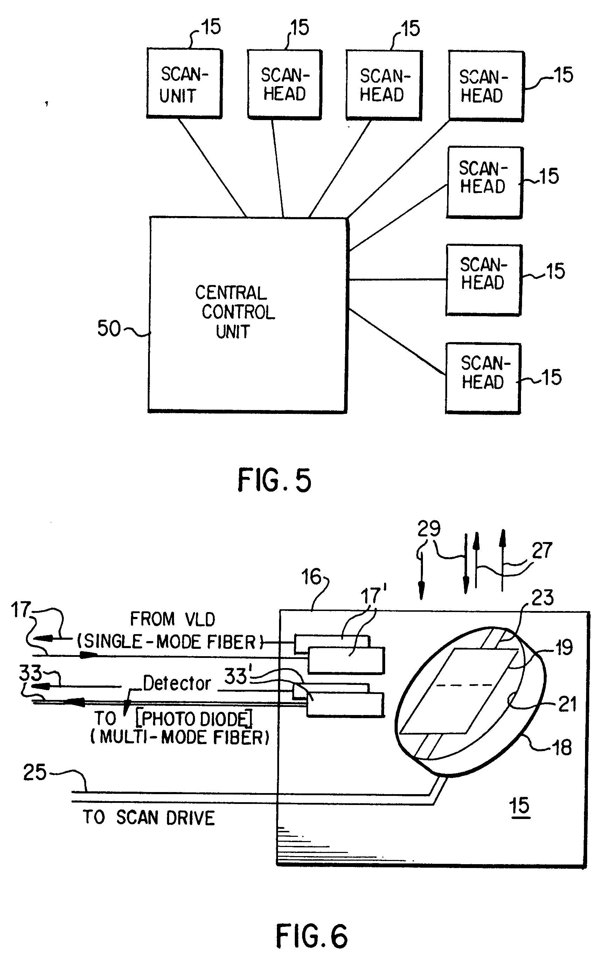

In one preferred embodiment, each of the scan units 15 receives light from a central control unit 50 (Figure 5) via an optical fiber and directs the light in a scanning pattern into the space or opening between the tunnel scanner 10 and the conveyor belt system 20. Each of the scan units 15 also receives light reflected from surfaces of the items which the conveyor belt system 20 moves through the opening under the tunnel scanner 10. In the optical fiber preferred embodiment, the scan units 15 transmit the reflected light back through optical fibers to the central control unit 50 for processing.

In the simple embodiment shown (see e.g. Fig. 2), it is assumed that the items moved by the conveyor system 20 have six square or rectangular sides orthogonal with respect to each other. Most packing boxes exhibit such a shape. For simplicity of discussion here, it is also assumed that typically the symbol will most often appear on the top or bottom of the item, or on the left side surface or the right side surface of the item, as the item moves through the scanning space 100. The line of sight of the various scan units 15 along each edge of the scanning space 100 aim directly into the opening. Each scan unit therefore nominally scans a plane substantially parallel to the direction of motion M of the items moved by the conveyor system 20. The scan units 15 mounted along the same edge of the opening 100 scan different fields of view and therefore scan different sections of the same nominal scanning plane. These sections may be contiguous or may overlap slightly.

As such, the scan units shown scan four different nominal scanning planes within the scanning space 100. Additional scan units may be provided to scan along different lines of sight and/or with respect to different nominal scanning planes, for example to scan front and back surfaces of items passing through the space 100.

The lower scan units 15b scan a bottom plane corresponding to the expected bottom surface of items moving along the conveyors, i.e coinciding with or closely parallel to the plane of the top surface of the conveyors 20a, 20b. This nominal scanning plane would correspond to plane P3 in Figure 1. The upper scan units 15t face down and nominally scan a top plane corresponding to the expected top surface of items moving along the conveyors, i.e parallel to but at a distance above the plane of the top surface of the conveyors 20a, 20b. Because of the extended working range of the scan units, the units 15b and 15t can scan indicia on top and bottom surfaces on packages of a wide range of sizes. Also, the actual surfaces scanned need not coincide with or be parallel to the nominal scanning planes, as discussed below.

The scan units preferably provide a moving spot laser beam.

The left side scan units 15l on bracket section 11c have horizontal lines of sight and nominally scan a vertical side plane corresponding to the expected left side surface of items moving along the conveyors. This nominal scanning plane corresponds to the plane P1 in Figure 1 and is substantially perpendicular to the plane of the top surface of the conveyors 20a, 20b. The right side scan units 15r on bracket section 11a also have horizontal lines of sight but nominally scan a vertical side plane corresponding to the expected right side surface of items moving along the conveyors. This right side scanning plane would be parallel to but at a distance from the plane P1. Due to their extended working range, the scan units 15l and 15r can effectively scan indicia on side surfaces of packages of a wide range of sizes and essentially at any lateral position on the conveyor system as the packages pass through the scanning space 100. Again, the actual surfaces scanned need not precisely coincide or be parallel to the nominal scanning planes.

Figure 2 shows the tunnel scanner 10 located at a transfer point between two separate belts of the conveyor belt system 20. As noted above, this permits location of scan units 15b below the path of the conveyed items so as to face upward and scan the lower surface of the conveyed items. If it were not necessary to scan from below, the scanner could be positioned anywhere along the belt system that is convenient or at which it is desired to identify items. For example, in a point of sale terminal, it might be desirable to place the scanner at the end nearest the cash register. Where the conveyor belt is used for manufacturing operations, there might be a number of scanners at different points along the conveyor to identify transported items which the belt transports to various work stations located at different distances along the belt.

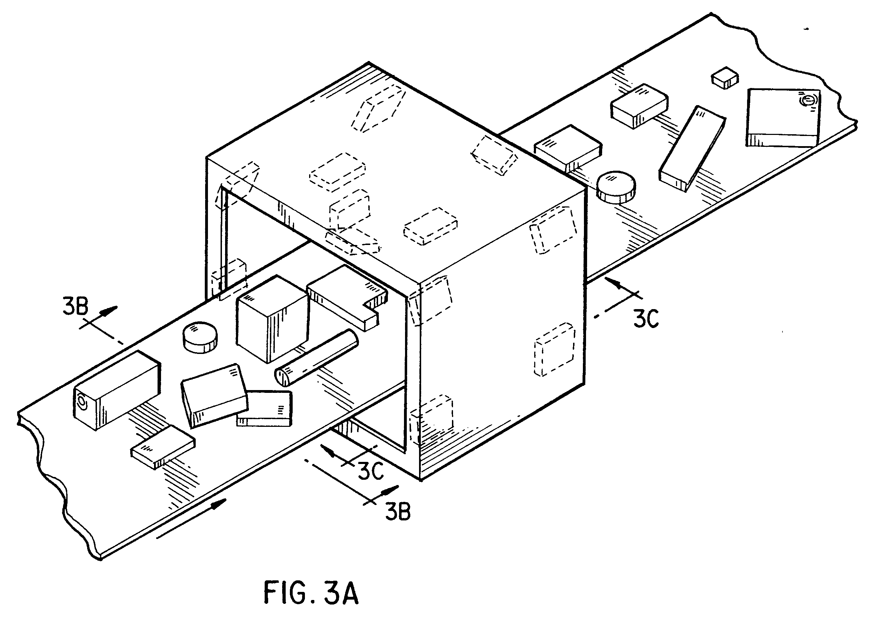

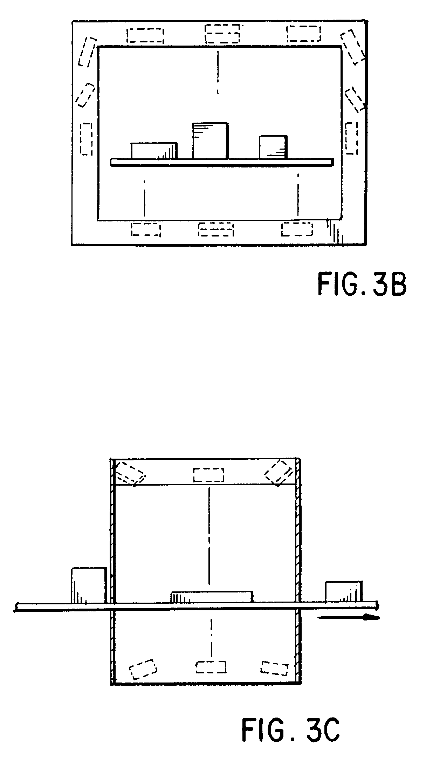

As shown in Figures 3A, 3B and 3C, to further enhance the ability of the scanner system to scan objects without requiring manual orientation of the objects, the tunnel scanner 30 includes a number of scan units oriented to nominally scan different planes. If some objects have surfaces at different angles, so tilted or skewed that indicia on such surfaces would not pass within the field of view of the scan units shown in Figure 2, the additional scan units of Figures 3A, 3B and 3C scan planes such as P2 in Figure 1 which would correspond to the expected surface angle. To scan front and back surfaces of the objects, additional scan units are mounted to aim upstream and downstream to scan planes at an angle to the line of motion M.

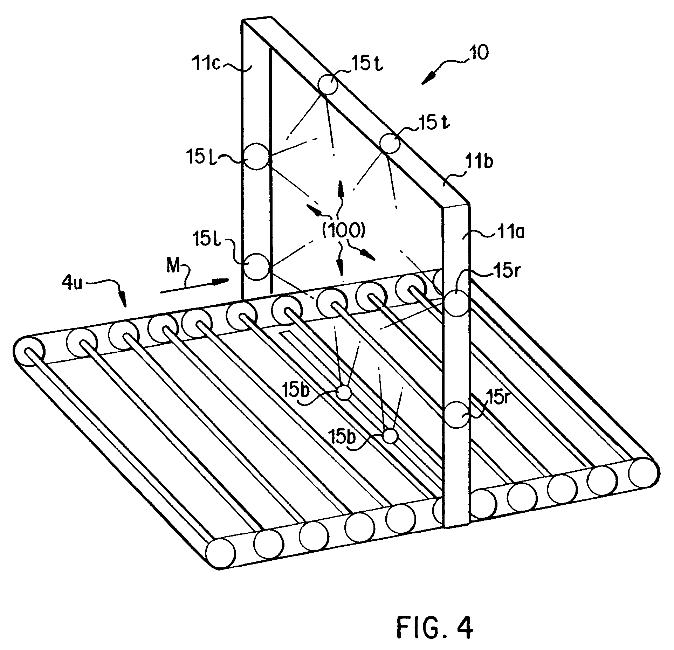

Figure 4 shows the tunnel scanner 10 set up to scan items passing along a modified conveyor belt system 40. Like elements of the tunnel scanner are indicated by the same reference numerals as in Figure 2 and operate in the same manner as discussed above. In the embodiment of Figure 4, the actual belt of the conveyor 40 consists of a flexible, substantially transparent material, such as a transparent plastic sheet or film. The conveyor 40 therefore uses a single belt, without a gap or transparent plate as in the earlier embodiment. In Figure 4, the scan units 15b (two shown) positioned below the path of the items moved by the conveyor 40 are positioned inside the loop formed by the belt, i.e. between the upper and lower sections of the conveyor belt. The scan units 15b are located between two of the roller sets on which the transparent conveyor belt moves and face upward (substantially vertical lines of sight) to scan the bottom surface of the items through the transparent material of the belt.

The transparent conveyor 40 of Figure 4 could, if desired, also be used with a scanner system of the type described in connection with Figures 3A, 3B and 3C above. This would allow the scanning of front and back surfaces of objects using additional scan units mounted below the transparent surface of the conveyor belt and aimed upstream and downstream to scan planes at an angle to the line of motion. The scanner system would thus be able to more easily scan symbols appearing on the front and back surfaces of the objects being conveyed.

Figure 5 (already referred to above) shows, in simplified block diagram form, the connection of the central control unit 50 to each of the optical scan units 15. In one embodiment, each bundled cable connecting the central control unit 50 to one of the scan units 15 includes two optical fibers, one carrying laser light to the scan unit and one carrying light reflected off a scanned object back to the control unit 50. The cable will also include a number of electrical leads to carry a drive current to some form of scan motor in the scan unit to produce the desired scanning motion of the emitted light beam, preferably a laser beam.

The central control unit 50 will include circuitry for producing the necessary drive signal, a light emitter such as one or more visible laser or light emitting diodes, one or more photodetectors and/or charge coupled device (CCD) detectors or other solid state imaging devices for converting the reflected light to corresponding electrical signals, and circuitry for processing those electrical signals. The processing circuitry includes the amplification stages, digitizer, etc. for processing the electrical signal from the photodetector and/or other sensor to produce a single decoded representation of the information contained in scanned symbols or other scanned indicia. The central control unit 50 will also include some means to output the decoded information, for example to a host computer. The host computer may supply the control unit 50 with information, such as price data, to provide displays to operators or customers using the scanner system.

Figure 6 illustrates a first preferred embodiment of one of the scan units 15 used in the tunnel scanner 10 of Figures 2 and 4 and tunnel scanner 30 of Figures 3A, 3B and 3C. The scan unit 15 receives light from one or more laser or light emitting diode in the central control unit 50 via a single mode optical fibers 17. Preferably, said light is laser light, preferably emitted from a visible (light) laser diode (VLD). A printed circuit board 16 supports lenses 17' attached to the light emitting end surface of each fiber 17, in such a position that the laser light carried by the fiber 17 emerges from each lens 17' and impinges on a scanning mirror 19. It will be understood that for certain applications or configurations multiple scanning mirrors could be used.

The circuit board 16 also supports a drive coil 18, and the scanning mirror 19 is pivotally supported in an opening 21 through the coil 18. In the preferred embodiment, the pivotal support comprises a single flexible strip 23 extending across the opening 21. The mirror is glued or otherwise attached to the center of the flexible strip 23. The flexible strip may comprise a Mylar™ or Kapton™ film. The scan unit 15 may use a variety of other pivotable support structures. For example, the pivotal support may comprise a torsion wire spring extending across the opening, or two separate flexible strips or springs each attached between the side of the mirror and the adjacent side surface of the opening 21. In the rest position, shown in the drawing, the mirror 19 is at an angle with respect to the emitted light from fibers 17 to redirect that light generally into the scanning space 100.

A permanent magnet, represented by a dotted line in Figure 6, is also attached to the center of the flexible strip 23 behind the mirror 19. The permanent magnet is aligned so that the axis between its north and south poles is perpendicular to the axis of coil 18. For example, the axis of the permanent magnet could be parallel to or within the plane of Figure 6, and the axis of the coil 18 would be perpendicular to the plane of that drawing. The axis of the permanent magnet would also be perpendicular to the axis of the flexible strip 23.

The coil 18 and permanent magnet form a scanning motor for causing the mirror 19 to oscillate back and forth on the pivotal support structure formed by the flexible strip 23. More specifically, the coil 18 serves as an electromagnet receiving a drive current signal from the central control unit 30 on the electrical leads 25. When a current is introduced through the coil 18, interaction between magnetic fields of the coil and the permanent magnet creates a torque causing the permanent magnet and the attached mirror 19 to move from an equilibrium position. This torque on the permanent magnet tends to force the axis of permanent magnet in line with the axis of coil 18. The torque and resulting motion of the permanent magnet cause the flexible strip 23 supporting the mirror 19 to twist and produce a return force. This return force is effectively trying to bring the permanent magnet and the mirror back to the rest position.

Reversing the polarity of the current applied to the coil 18 will reverse the directions of the magnetic force. Therefore, if the current applied to the coil 18 through leads 25 takes the form of a cyclical AC signal, such as a sine wave, a pulse signal, a triangular wave, etc., the induced magnetic forces and the return forces produced in the flexible strip will produce an oscillatory movement of the permanent magnet and the attached mirror 19. The flexible strip(s) twist back and forth causing the mirror to oscillate.

The laser beam emitted from each lens 17' attached to the end of the each optical fiber 17 impinges on the scanning mirror 19 and is directed along a light path as shown by the arrows 27, toward an object to be scanned. The oscillating motion of the mirror 19 causes the light paths 27 to pivot back and forth (into and out of the plane of Figure 6) to produce one or more scan lines across any object passing through the opening 100 under the tunnel scanner.

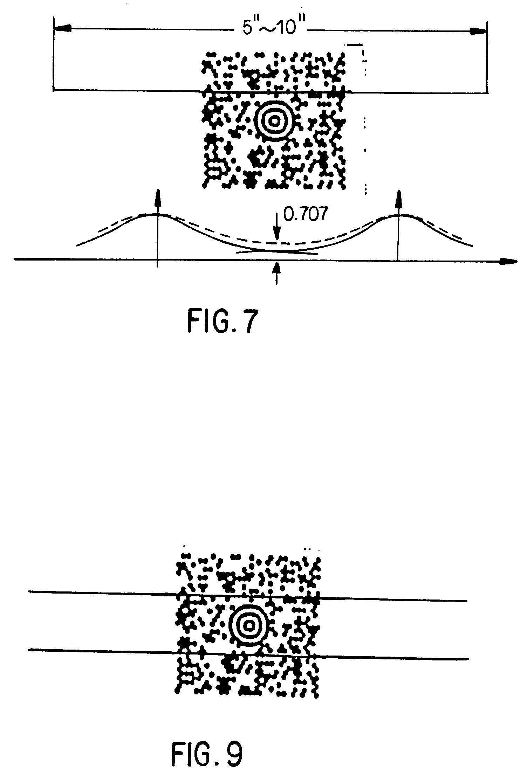

The lenses are arranged such that reflection off oscillating mirror 19 of the light beam emitted by one of lenses 17' scans across one portion of the targeted symbol and the light beam emitted through the other lens 17' scans across a different portion of the symbol being read. Thus, the light beams form a single line scan across the width of the symbol as shown in Figure 7. Hence, a faster scan can be performed because different portions of the symbol are scanned simultaneously. It will be understood that additional lenses and associated optical fibers could be used such that more than two portions of a symbol can be simultaneously scanned by a single scan line. It will also be understood that although Figure 7 shows a scan line, as noted above the mirror could be oscillated in more than one direction simultaneously. This would cause the light emitted through the lenses to form a raster, omni-directional or other desired scan pattern over the different portions of the symbol to facilitate the reading of two dimensional or more complex symbols, such as those conforming to "UPSCODE".

Light 29 reflected off of a scanned symbol (see e.g. Fig. 6) also impinges on the mirror 19. The mirror 19 directs the reflected light 29 to collecting lenses 33' on the light receiving end of multi-mode optical fibers 33. The lenses 33' might be eliminated if the mirror 19 includes a curved surface to focus the reflected light on the receiving end of the fibers. The optical fibers 33 transmit the reflected light to one or more photodetectors, such as photodiodes, in the central control unit 50.

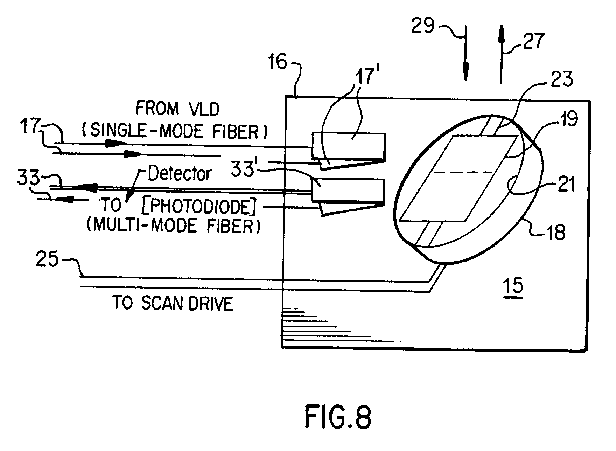

Figure 8 depicts a second preferred embodiment of a scanner unit 15 for use in a tunnel scanner with two emitter lenses 17' and two detector lenses 33'. Like elements of the scan unit 15 are indicated by the same reference numerals as in Figure 6 and operate in the same manner as discussed above. The only difference between the scanner unit of Figure 6 and that of Figure 8 is that one of the optical emitter lenses and one of the detector lenses is angled with respect to the other to allow the emitted beams to produce two parallel but offset scan lines across the symbol being read and the detection of the reflected light by the detector lenses 33'.

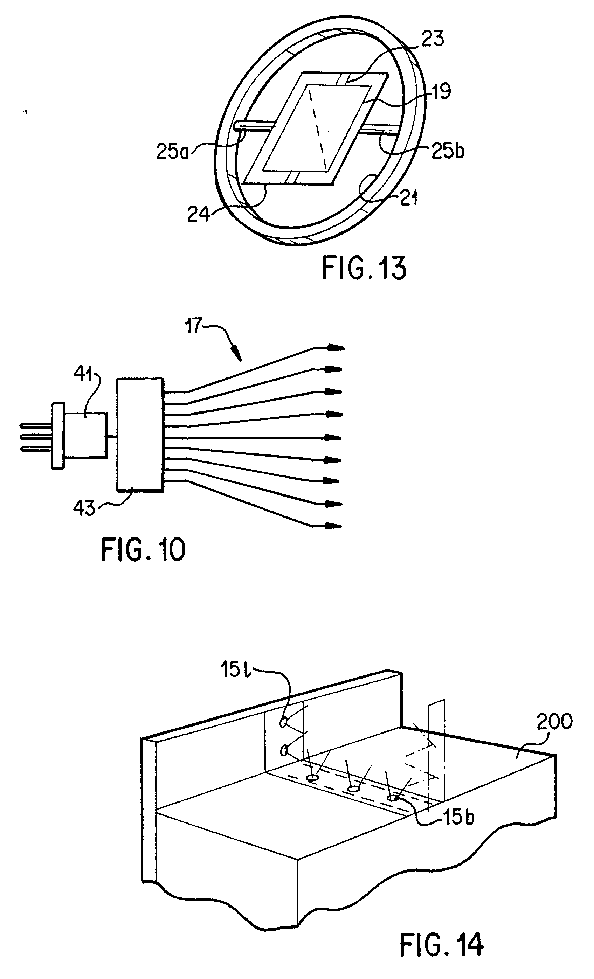

Figure 9 depicts the dual scan lines obtainable with the Figure 8 configuration. It should be recognized that by oscillating the mirror 19 in two directions other scan patterns can be formed if desired. In either case, the scanning can be performed in substantially less time than that required using a single lens system because different portions of the symbol are scanned simultaneously. It should also be noted that the symbol could be divided into even further portions and more than two emitter and detector lenses and additional optical fibers provided to even further increase the speed at which a scan can be performed.

The central control unit 50, in the first and second embodiments, contains one or more light emitters for producing the beams of light used in scanning optically encoded indicia. Figure 10 depicts one embodiment of an emitter (e.g. a laser diode 41) and the means to couple the emitter 41 to e.g. two, generally a plurality of the single mode fibers 17 for transmission to each of the scan units 15. As shown, a high power laser or light emitting diode 41 emits light into a mechanical/optical coupler 43 positioned adjacent the output of the diode 41. Preferably, visible light is emitted. The coupler 43 provides physical support for the end of each of the fibers 17 at an appropriate position to receive the beam. The coupling device 43 may also include optical means, such as one or more lenses, to provide efficient coupling of the light from the diode 41 into the plurality of transmitting optical fibers 17. Each pair of the fibers 17 carries a portion of the emitted light from the coupling device 43 in the central control 50 to a respective one of the optical scan units 15. As an alternative to the embodiment of Figure 10, the central control unit 50 could use a separate diode of low power, and a separate coupler, for transmitting the light beam from one diode through a single optical fiber.

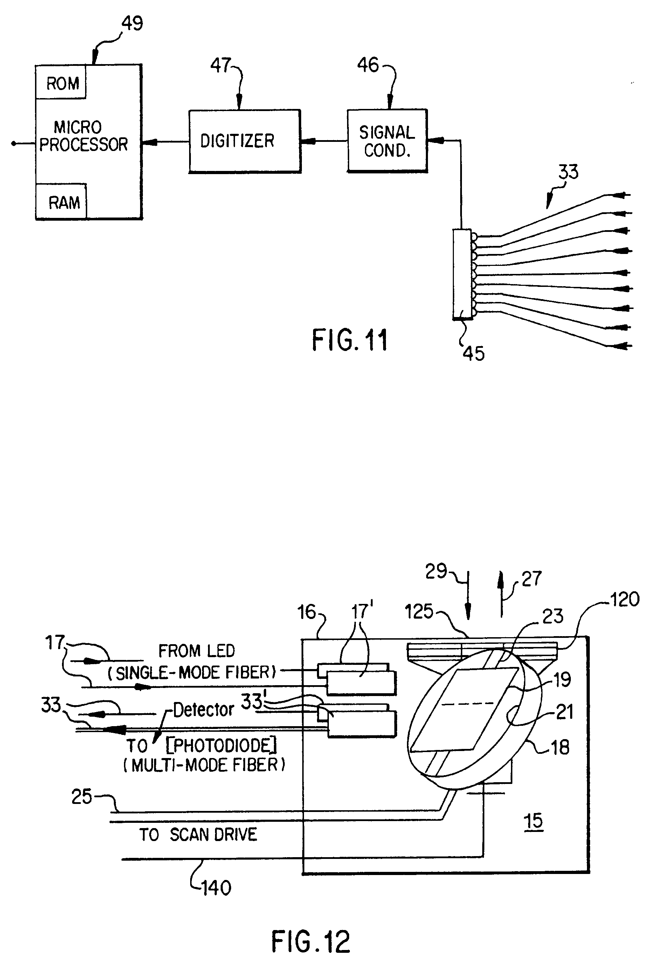

The central control unit 50 may also contain a photodiode array 45 and associated signal processing circuitry to produce a single decode result, shown in Figure 11. The photodiode or other photo detection array 45 is coupled to the multi-mode return fibers 33, to receive reflected light transmitted back from the scan units. The signals from the different photodiode elements of the array 45 are clocked out to a single high speed processor for digitizing and decoding, in a manner similar to processing signals from a charge coupled device (CCD) type reader. In the illustrated example, the high speed processor/decoder comprises a signal conditioning circuit 46, a digitizer 47 and a microprocessor 49 (with RAM and ROM). The microprocessor 49 provides control signals to the array 45 to clock out the signals from the photodiode elements of the array 45. The analog signal from the photodiode array is amplified, inverted and conditioned by the analog signal conditioning circuit 46. The digitizer 47 converts the analog signal to a digital pulse signal, preferably by processing the analog signal to produce a pulse eignal where the widths and spacings between the pulses correspond to the widths of the bars and the spacings between the bars of a bar code symbol. The digitizer 47 has a threshold value set which effectively defines what portions of a signal the scanner system will recognize. The microprocessor 49 demultiplexes the clocked output signals from the array 45, representing light transmitted back from the individual scan units 15. Alternatively, the demultiplexing may be performed prior to digitizing. The microprocessor 49 analyzes each signal received from the digitizer to find and decode a legitimate message represented by the photodiode signal corresponding to light transmitted back by one of the scan units.

Alternatively, the central control unit 50 could include a separate photodetector for receiving reflected light via each fibre or each pair of the fibers 33 associated with each scan unit 15. In such an embodiment, there could be a separate signal conditioning circuit, digitizer and decoder arrangement responsive to each photodetector output, and one of the decoder's would signal when it was first to achieve a valid decode result. Alternatively, the digitized signals from the plurality of photodetectors could be processed in parallel by a single high speed decoder. In each case, the central control includes some form of processor means to analyze the signals from the various scan units, recognize decodable data represented by one or more of the signals from the scan units, and decode that data to produce a single decode result for each scanned indicia.

The scan heads according to the invention produce preferably a one dimensional scanning pattern, i.e. the beam spot moves along a scan line. To read bar code type symbols with such a scanning pattern, the bars of the symbol must be at a substantial angle approaching 90° with respect to the scan line. If the bars are too nearly parallel to the scan line, the scan line will not scan across the entire length of the bar code symbol. If exactly parallel, the scan line will pass over only one bar or only one space. Thus, if the scan lines of all of the scan heads are parallel to the direction of motion M, the items on the conveyor must be orientd so as to present the bar code in such a manner that the bars thereof are perpendicular or sufficiently close to perpendicular to the direction M, to permit one of the scan heads to read the code.

To further reduce or eliminate the need for orienting the conveyed items, the scanner system can be made omni-directional, i.e. to produce a scanning pattern which can sense bar codes regardless of orientation. Using the one-dimensional scan heads 15 discussed so far, this would requir adding more scan heads on each edge or side of the scanning space 100 (see also Figs. 3A-C). These added scan heads would be oriented to produce scan lines in the same planes but with their respective scan lines oriented at a different angle in the particular scanning plane. The lines crossing in the different planes P1, P2 and P3 in Figure 1 represent scan lines of different orientation within each plane.

An alternative to the retro system shown in Fig. 11 is a non-retro configuration utilizing only one multi-mode fiber to replace the fiber bundle 33 of Fig. 11. The multi-mode fiber with collective optics at one end and another end aiming to the active area of the photodiode without passing through the lower half of the scanning mirror is shown in Fig. 8.

In a third embodiment of the scanner unit 15 of the present invention, a hybrid laser scan unit is provided as shown in Figure 12. A charge coupled device (CCD) 120 is included in the scanner unit. Like elements of the scanner unit 15 are indicated by the same reference numerals as used in Figures 6 and 8 and operate in the same manner as discussed above unless otherwise noted below.

The CCD shown has a linear array which is preferably 1024 pixels. A solid state imaging device could be used in lieu of the CCD if desired. The CCD senses the symbol, and generates an electrical signal representing visible light reflected from the symbol. The reflected light can be visible ambient light or visible light emitted from lenses 17'. If reflected ambient light is to be detected by the CCD 120, the CCD includes an ambient light detector 125 to detect the ambient light in the field of view of the scan unit 15. If the detected ambient light does not meet the necessary threshold to get a satisfactory read from the CCD 120, an output signal is sent to the central control unit 50 over transmission media 140 to activate the laser diodes and photodiodes and scanning is performed as described above with respect to Figures 6 and 8. Alternatively, CCD 120 can, if desired, read light from visible light beams reflected from the target symbol. In such case, the ambient light detector 125, the activator, and the photodiodes and associated optics including lenses 33' and optical fibers 33 can be eliminated if desired. After detecting the reflected visible light, the CCD 120 generates an electrical circuit corresponding to the applicable symbol. The electrical signal is processed in the conventional fashion as discussed above.

To read bar code type symbols with a single or double line scanning pattern, the bars of the symbol must be at an angle approaching 90° with respect to the scan line or lines. If the bars are too nearly parallel to the scan line or lines, the scan line or lines will not scan across the symbol. If exactly parallel, the scan line or lines will pass over only one bar or only one space. If the scan lines of all of the scan units are parallel to the direction of motion M, the items on the conveyor must be oriented so as to present the bar code in such a manner that the bars thereof are perpendicular or sufficiently close to perpendicular to the direction M, to permit one of the scan units to read the code. This problem can be avoided by orienting the scan units in many different directions as shown in Figures 3A, 3B and 3C or using a CCD or other imaging device as in the Figure 12 embodiment. Another way to reduce or eliminate the need for orienting the conveyed items, is to make the scanner units so as to be capable of scanning in a raster, omni-directional, or other scanning pattern which can sense bar codes regardless of orientation.

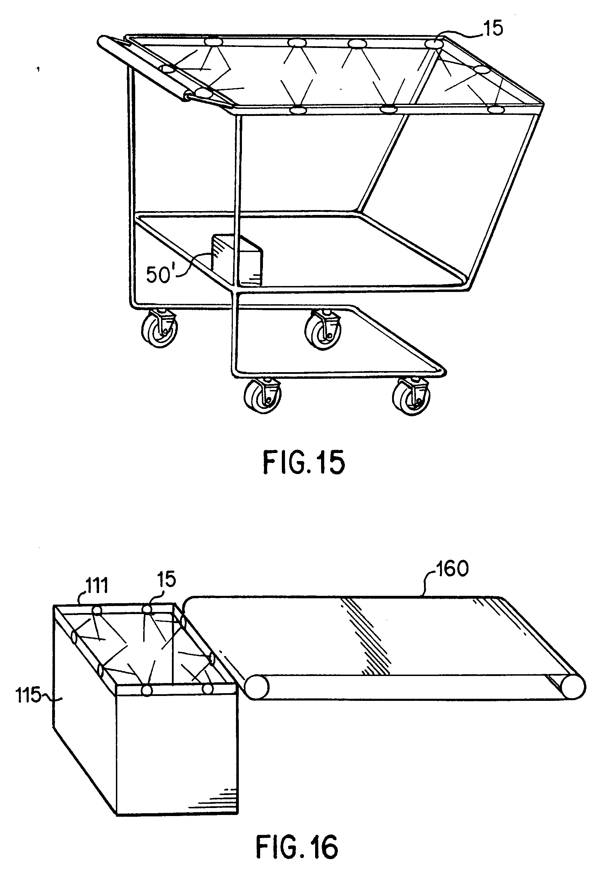

To produce such a raster, omni-directional or other pattern, the scan unit must produce two directions of motion of the scanning beam, at carefully selected frequencies and phases. Figure 13 shows a modification of the scanning motor which would produce such a two dimensional scanning pattern for omni-directional scanning. The scanning motor shown in Figure 13 would replace the coil, mirror and single pivotal support arrangement shown in Figures 6, 8 and 12. In the scanning motor of Figure 13, the mirror 19 is again attached in the center to a flexible strip 23, as in the above described scan unit embodiments. In the two dimensional embodiment, however, the flexible strip extends across and attaches at its ends to a rigid support frame 24. The support frame 24 consists of a non-magnetic material, such as hard plastic or a metal such as a beryllium-copper alloy. The flexible strip 23 attached to support frame 24 permits the mirror 23 to pivot back and forth about a first axis, i.e. the axis of the flexible strip 23.

A pair of additional flexible strips 25a, 25b extend from the sides of the support frame 24 to the edge of the coil 18. The flexible strips 25a, 25b permit the support frame 24 to pivot back and forth about a second axis i.e. the axis of the flexible strips 25a, 25b. The pivotal oscillation of the support frame 24 produces a corresponding pivotal oscillation of the mirror 29 supported thereby.

To produce the desired two-dimensional scanning patterns, the vibrational movement about one axis should be at a higher frequency than the vibrational movement about the other axis. Each spring system, i.e. the first spring system formed by flexible strip 23 and the second spring system formed by flexible strips 25a, 25b, will vibrate at a characteristic frequency. In general, when a spring must move a higher mass it vibrates at a lower characteristic frequency. In the system of Figure 13, the first flexible strip 23 carries the mass of the permanent magnet (shown by the dotted line) and the mirror 19. In addition to this mass, the second spring formed by the flexible strips 25a, 25b carries the mass of the first flexible strip 23 and the mass of the rigid support frame 24. As a result, the mass moved by the second spring system formed by flexible strips 25a, 25b is somewhat higher than the mass moved by the first spring system formed by the flexible strip 23. For some desired patterns, the difference in vibration frequencies caused by this mass differences may be sufficient. To further increase the mass difference, the frame 24 may support a balancing weight (not shown). To produce additional differences in vibration frequencies, the flexible strips may be designed differently, e.g. using different materials and/or different thickness of the flexible film strips.

The scanning motor in the embodiment of Figure 13 can still utilize a single permanent magnet, depicted as a dotted line in Figure 13. The permanent magnet is mounted behind the mirror 19. The orientation of the poles of this magnet will be different from that used in the embodiment of Figures 6, 8 and 12. The embodiment of Figure 13 also relies on a carefully selected drive signal applied to the electromagnet formed by coil 18.

Assume that the axis of the permanent magnet is parallel to or within the plane of Figure 13, and the axis of the coil 18 is perpendicular to the plane of that drawing. Instead of being perpendicular to the axis of the flexible strip 23, as in the embodiment of Figures 6, 8 and 12, the axis of the permanent magnet is at a 45° angle with respect to the axis of the flexible strip 23 and at a 45° angle with respect to the axis of the additional flexible strips 25a, 25b.

When there is no current through the coil 18, the resilient nature of the first and second spring systems causes the mirror 19 and the attached permanent magnet to return to the rest or equilibrium position shown in Figure 13. When a current is introduced through the coil 18, interaction between the magnetic fields of the coil and the permanent magnet creates a moment of force moving the permanent magnet and mirror 19 away from the rest position. Because the axis of the permanent magnet is at a 45° angle with respect to both pivot axes, forces applied to that magnet will include a vector orthogonal to each axis of rotation and will move the magnet away from its rest position with respect to both axes. As a result of such motion, a spring force is produced by the first spring formed by flexible strip 23, and another spring force is produced by the second spring system formed by flexible strips 25a, 25b. These spring forces oppose the motion and tend to bring the permanent magnet and mirror 19 back to the rest position. Reversing the polarity of the applied current will reverse the directions of the magnetic forces and the opposing spring forces. Therefore, if the current applied to the coil of the electromagnet coil 18 takes the form of a cyclical AC signal, such as a sine wave, a pulse signal, a triangular wave, etc., the induced magnetic forces and resultant spring forces will produce an oscillatory movement or vibration of the permanent magnet 109 about both axes.

To produce the two different frequencies of motion about the two different axes, the drive signal applied to the electromagnet comprises a superposition of two cyclical signals of different frequencies. The first signal component has a frequency within a high range of frequencies corresponding to the characteristic vibration frequency of the flexible spring strip 23. The second signal component has a frequency within a low range of frequencies corresponding to the characteristic vibration frequency of the spring formed by the pair of flexible strips 25a, 25b. Thus the vibratory magnetic forces applied to the permanent magnet will include the two different frequency components corresponding to the two component signals in the drive signal. Because of the different characteristic frequency of vibration of the two spring systems, each spring system will vibrate only at its natural vibration frequency in response only to the force vector orthogonal to its corresponding pivotal axis. Thus when the electromagnet coil 18 is driven by such a superposition signal, the first spring formed by flexible strip 23 will vibrate about the first axis at a frequency in the high range of frequencies, and the second spring system formed by the pair of flexible strips 25a, 25b will vibrate about the second axis at a frequency in the low range of frequencies.

In operation, a transmitting fiber 17 and associated lens 17' will emit light toward the mirror in the same manner as discussed above with regard to the embodiment of Figures 6, 8 and 12. In the configuration of Figure 13, however, the mirror 19 oscillates in two orthogonal directions at the two different frequencies, as discussed above. This oscillation of the mirror 19 causes the reflected beam 27 to scan back and forth in one direction and up and down in the other direction. The frequency of the vibrations and the phase relationship of the drive signal components are chosen to produce an omni-directional, raster or other scanning pattern which will include a series of differently oriented lines. It will be understood that the scan motor of Figure 13 can be substituted for the scan motor of Figures 6, 8 and 12 if desired.

The present invention can utilize a variety of other scan unit structures. For example, to produce the scanning motion in the second direction, rather than oscillate the mirror 19 in a second direction, the ends of the fibers and/or the associated lenses 17', 33' might move in a direction orthogonal to the oscillation relative to the axis of the flexible strip 23. If only one-dimensional motion is desired for a particular scanning application, the mirror 19 could be eliminated and the ends of the fibers moved. Systems for oscillating the end of optical fibers for scanning purposes are disclosed in US-A-5 404 001.

The Figure 12 arrangement of the scanner unit can, if desired, be modified such that the photodetector and associated optical fibers 33 and lens 33' are eliminated. Using such a scanner, the ambient light detector 125 determines if sufficient ambient light is available for detection of the symbol by CCD 120. If insufficient ambient light is available for-detection, a signal is sent via transmission line 140 to central control unit 50 to activate the laser diode. Light from the laser diode is reflected off oscillating mirror 19 to illuminate the symbol thus allowing detection of light reflected off the symbol by CCD 120. As noted above, the mirror arrangement in such a scanner unit can be of the type shown in Figure 13 to provide a two dimensional scan pattern. Alternatively, lens 17' could be oscillated in one direction orthogonal to the direction of oscillation of the mirror shown in Figure 12 to provide a two directional scan. Other arrangements could also be used to obtain a raster, omni-directional, or other scan pattern. The CCD processing in such a unit is as described previously.

As discussed above, the Figure 12 scan unit uses a charge coupled device (CCD) 120. This embodiment also does not rely on fiber optic connection from the CCD 120 to the central control. The embodiment of Figure 12 can also be modified such that lens 33' is a light emitting diode (LED) illuminator lens to provide a large quantity of light and illuminate indicia bearing surfaces of items passing through the scanning space. The LED illuminator lens 33' in the scan unit receives a signal from the central control via a cable 33. The CCD 120 is a linear or matrix array which essentially functions as a one or two dimensional camera sensor. Light reflected from an illuminated surface of the symbol is focused or imaged onto the CCD array 120. Elements of the array 120 each accumulate a charge level corresponding to the level of light which impinges thereon. The accumulated charge levels in the CCD array 120 are shifted out as a series of voltage signals over the non-optical cable 140 going to the central control for appropriate analysis and decoding.

To further improve the efficiency of the control system in detecting indicia, the processor in the central control unit 50 could use a form of scan stitching algorithm. As an object moves through the scanning space 100, the scan line or pattern from each head will pass over the corresponding surface of the object. The speed of the object, or the orientation, position or size of the indicia may be such that the scan line or pattern does not allow detection of the entire indicia during a single movement of the scanning spot along the respective scan line or pattern. With scan stitching, when the decoder detects a reading of a part of a symbol on one traverse of the scan by the beam spot, and another part of the code on one or more subsequent traverses, the decoder "stitches" together a complete decoded representation of the indicia from the two or more parts. US-A-5 241 164 and US-A-5 262 626 each disclose details of scan stitching operations. In the present system, the decoding circuitry in the central control unit would stitch together partially read information from different scan traverses of the spot from one optical scan unit and/or from scanning signals from two or more scan units.

The present invention is not limited to use with a conveyor or to scanning a particular number of different sides of the scanning space. Figures 14 to 16 and 17A and B provide a sampling of other tunnel scanners.

Figure 14 shows an "inverted tunnel" scanner for scanning orthogonal side and bottom surfaces of items bearing indicia. Instead of a conveyor, the scanner system is associated with a counter 200, such as might be used with a point of sale terminal in a store. In this embodiment, the bottom scan units 15b are incorporated into the lower section of the counter, below the surface thereof. The scan units 15b face upwards to scan the bottom surfaces of items which a customer or clerk moves through the scanning space. A transparent plate covers the scan units 15b.

Side scanners 15l are incorporated into a sideboard of the counter, behind another transparent plate. As in the embodiment of Figure 2, the left side scan units 15l scan a vertical side plane corresponding to the expected left side surface of items moving through the scanning space.

The inverted tunnel scanner may also include right side scanning units, shown in dotted lines in Figure 14. These additional scan units would be incorporated into a right side component of the counter, for example into the vertical support for a writing stand or pedestal on which customers might write checks or sign credit card receipts. As in the embodiment of Figure 2, the right side scan units would scan a vertical side plane corresponding to the expected right side surface of items moving through the scanning space.

Figure 15 shows an adaptation of the tunnel scanner to facilitate use thereof with a shopping cart. In this embodiment, the scan units 15 are mounted around the four sides of the top of the shopping cart. The scan units face inward. As such the top opening of the shopping cart through which a shopper normally drops items to be purchased also serves as the scanning space. This scanner would scan indicia on the dropped items essentially in the same manner that the scan units in the other embodiments. One or more of the scan units will scan the indicia on each item as the shopper drops each item into the cart. A central control unit 50' similar to that discussed above, would be mounted at an out of the way position on the cart and would connect to the scan units by optical fibers and/or associated electrical leads, as in the conveyor belt embodiments. In the embodiment of Figure 15, the central control unit 50' would include a memory for accumulating data identifying the products in the cart and/or some means, such as an infrared or RF (radio frequency) transmitter for wireless communication to download the scanned indicia data to a remote host computer, or the like. If the central control unit 50' were mounted on or near the handle of the cart, the central control unit might also include a keyboard and display to permit other, manual inputs by the shopper. Price information could be received from the host computer via wireless link, for example to provide the shopper with a detailed account of shopping expenses in real-time.

The embodiment of Figure 15 can also automatically subtract items removed from the cart, for example if the shopper changes his or her mind and decides not to purchase a particular item. In this regard, the system would include photoelectric cell arrangements, not shown, for sensing the direction of motion of items placed into and taken out of the shopping cart.

Figure 16 depicts another application of the tunnel scanner. In this embodiment the scan units 15 are mounted around the four sides of a bracket 111. The bracket supports a bag 115 from its lower edge. The shopper or a cashier places items for purchase into the bag 115 through the opening formed by the bracket 111. The bracket and bag may be at the end of a conveyor 160 such as used in checkout counters in grocery stores or at the end of a counter top on which the shopper normally places items before processing by a cashier. Instead of using the bracket 111, the scan units may be arranged around the top opening of a well into which the bag is placed before loading of items into the bag. In either case, insertion of items into the bag 115 will pass the items through the scanning space and result in an automatic scanning of indica on each item.

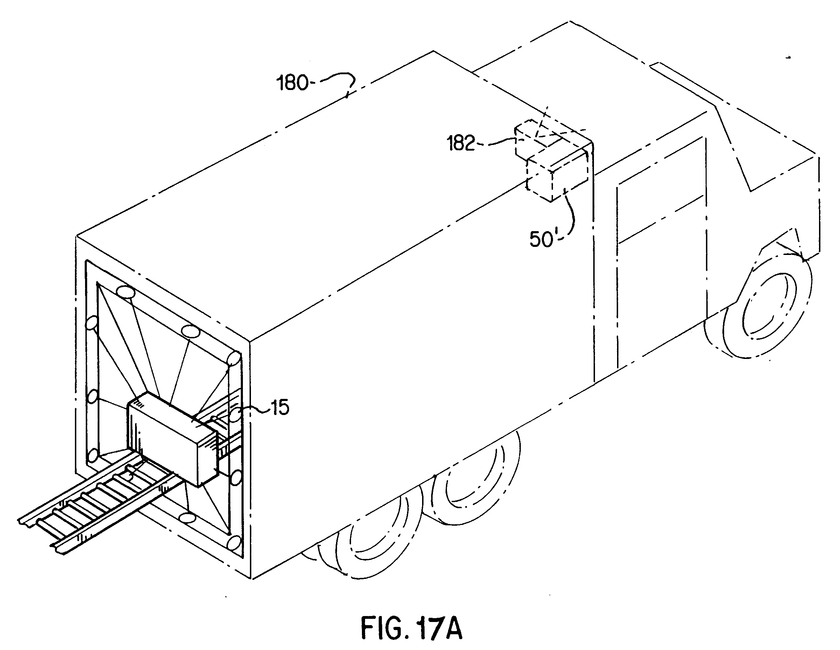

Figure 17A depicts an adaptation of the tunnel scanner for use on a truck 180. In this embodiment, scanner units 15, which could be in any number of configurations as may be suitable for the particular implementation, encloses an opening in the trailer portion of the truck so that parcels entering and/or exiting the truck can be scanned by scanner units 15. A control unit 50' is secured in a location so as not to interfere with the loading, unloading and stowage of the parcels. A wireless transmitter 182, for example a conventional radio frequency transmitter, transmits a signal corresponding to a signal received from the control unit 50'. The transmitted signal, accordingly, corresponds to the detected reflected light from the scanned parcel. The transmitted signal may or may not have been pre-processed, depending on the components in the control unit. A base station (not shown) receives the transmitted signal and is thereby able to track the parcel. Although shown with particular reference to a truck configuration, this adaptation could easily be adapted for use with any parcel transport vehicle including, but not limited to, planes, trains, ships, barges and automobiles.

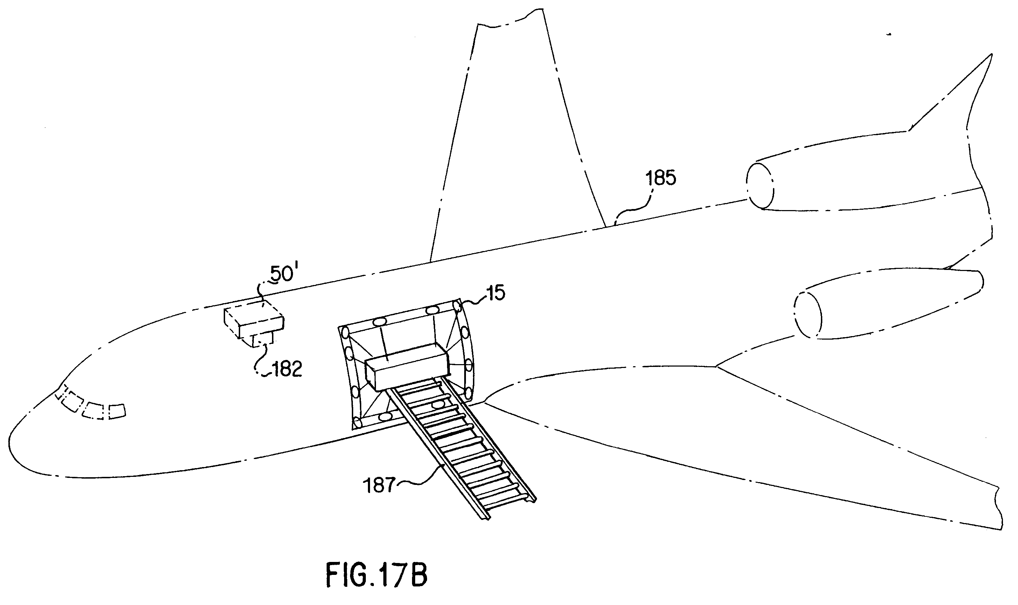

Figure 17B shows an adaptation of the tunnel scanner similar to that of Figure 17A but for use on a plane 185. In this embodiment the scanner units 15 surrounds an opening in the side of the cargo plane 185. Either a conveyor or chute, designated 187, are used to respectively load or unload parcels into or out from the cargo holding area. As in the configuration of Figure 18A, transmitter 182 transmits a signal corresponding to that received from control unit 50'. The transmitted signal likewise corresponds to the light detected by the tunnel scanner reflected from a symbol on the scanned parcel upon entering or exiting the cargo area. A base station (not shown) receives the transmitted signal and is thereby able to track the parcel from destination to destination. Although shown with particular reference to a plane configuration, this adaptation could likewise easily be adapted for use with any parcel transport vehicle including, but not limited to, trucks, trains, ships, barges and automobiles.

A still further adaptation of the present invention, is particularly suitable for use where a package, with a package bar code, or other optically coded symbol attached thereto, is carried by a human carrier through the area being scanned by the tunnel scanner. In such cases, the symbol may not be detectable by the tunnel scanner because the package is carried in such a manner that the scanner's field of view is blocked, thus preventing detection of the package symbol. This may occur, for example when the package symbol is pressed up against the carrier's body or clothing.

In order to avoid having packages carried through the tunnel scanner without the package symbol being detected, the tunnel scanner in this adaptation additionally includes a photosensor or other device for detecting entry of the carrier into the field of view of the tunnel scanner. Rather than, or in combination with the photosensor, the carrier could be provided with a helmet, hat, glove, or other article capable of being worn or carried by the carrier, with an optically encoded identification (ID) bar code, or other type ID symbol, attached to it. The ID symbol is automatically read when the carrier enters the field of view of the tunnel scanner thereby detecting his/her entry. A signal corresponding to the detected ID symbol can be processed by a processor, which is part of or separate from the tunnel scanner, to obtain the identity the carrier. The article being worn or carried may alternatively have another form of automatic identifier, such as a low power radio frequency (RF) identification tag which emits an RF signal corresponding to the carriers identification. In this later case, the tunnel scanner includes an RF receiver or transceiver which receives the emitted RF signal and thereby automatically detects the carrier's entry into the tunnel scanner's field of view. The receiver preferably includes a processor which is capable of processing the received RF signal to identify the user. The processor however may, if desired, be provided separate from the tunnel scanner.

The tunnel scanner preferably also includes an audible or visible indicator, such as a beeper or light, to provide an audio or visual feedback if the detected entry of the carrier is not accompanied by the detection and reading of a package symbol. If the carrier is wearing or carrying an article with an automatic identifier, the carrier's ID may be determined by processing the signal corresponding to the detected ID symbol or the received RF signal, as applicable, immediately after detection or reception. The carrier's ID may also be stored at this time in a memory device which is part of or separate from the tunnel scanner. Alternatively, the tunnel scanner may include a clock circuit, or other delay mechanism, to delay the processing of the signal corresponding to the ID symbol or the received RF signal, and the storing of the carrier's ID, until passage of a predetermined period of time after detecting the carrier's entry into the scanner's field of view. This allows the carrier a reasonable period of time, after notice by the indicator that the package symbol on a package has not been properly scanned, to take the necessary steps to ensure a satisfactory read of the symbol. This may be accomplished by the carrier simply reorientating the package to place the package symbol in the tunnel scanner's field of view or may require the carrier to reenter the field of view with the package in a different orientation. If the predetermined time period passes without a satisfactory read of the package symbol, the carrier's ID is then determined by processing the signal representing the detected ID symbol or the received RF signal, as applicable, and the ID is stored in the memory device. By retaining the carrier's ID in storage, the carrier can be subsequently identified. For example, the stored ID can be displayed on a display which is incorporated in or separate from the tunnel scanner. The carrier can thereby be held accountable for having failed to ensure that a package symbol was read before storage in or removal from a particular location.

Even though the present invention has been described with respect to reading one or two dimensional bar code and matrix symbol symbols, it is not limited to such embodiments, but may also be applicable to even more complex indicia scanning or data acquisition applications. It is conceivable that the system of the present invention may also find application for use with various machine vision or optical character recognition applications in which information is derived from indicia such as printed characters or symbols, or from the surface or configurational characteristics of the article being scanned.

In all of the various embodiments, the elements of the scanner may be implemented in a very compact assembly or package such as a single printed circuit board or integral module. Such a board or module can interchangeably be used as the dedicated scanning element for a variety of different operating modalities and types of data acquisition systems.

Each of these different implementations is associated with a different modality of reading bar code or other symbols. Other modalities within the scope of the present invention envision the articles being moved past a plurality of scan modules oriented in different directions so at least the view allows one scan of a symbol which may be arbitrarily positioned on the article.

The module would advantageously comprise an optics subassembly mounted on a support, and a photodetector component. Control or data lines associated with such components may be connected to an electrical connector mounted on the edge or external surface of the module to enable the module to be electrically connected to a mating connector associated with other elements of the data acquisition system.

An individual module may have specific scanning or decoding characteristics associated with it, e.g. operability at a certain working distance, or operability with one or more specific symbologies or printing densities. The characteristics may also be defined through the manual setting of control switches associated with the module. The user may also adapt the data acquisition system to scan different types of articles or the system may be adapted for different applications by interchanging modules in the data acquisition system through the use of a simple electrical connector.

The scanning module described above may also be implemented within a self-contained data acquisition system including one or more such components as keyboard, display, printer, data storage, application software, and data bases. Such a system may also include a communications interface to permit the data acquisition system to communicate with other components of a local or wide area network or with the telephone exchange network, either through a modem or an ISDN interface, or by low power radio broadcast from a portable terminal to a stationary receiver.

## Claims

1. A system (10) for scanning indicia having parts of different light reflectivity, comprising:
a plurality of optical scan units (15l, 15r, 15t, 15b, 15), wherein each said scan unit (15l, 15r, 15t, 15b, 15) includes:
(i) first light emitting means (17, 17') for emitting a first light beam (27)
(ii) means for directing (18, 19, 21, 23) said first light beam (27) towards said indici, such that said first light beam (27) scans a first portion of said indicia, and
(iii) detection means (33, 33') for detecting reflected light (29) from the first scanned portion of the indicia, and
a central control means (50) for receiving signals corresponding to detected reflected light (29) from each of said plurality of optical scan units (15l, 15r, 15t, 15b, 15) and processing said signals to determine information represented by said indicia,
characterized in that :
- each scan unit also comprises second light emitting means (17, 17') for emitting a second light beam (27), the wavelength of which is equal to the wavelength of the first light beam (27),
- said means for directing also scans said second light beam (27) towards said indicia such that said second light beam scans a second portion of said indicia, different from the portion scanned by the first light beam, and
- said detection means (33, 33') also detects reflected light from the second scanned portion of said indicia.

2. A scanning system according to claim 1, further comprising:
means (11, 20) for defining a space (100) through which the item bearing the indicia will move;
wherein each said optical scan unit (15) optically senses variations in light reflectivity on the surface of said item as the item moves through said space and includes means for transmitting said generated signals;
wherein a first one of the optical scan units (15) is oriented for optically sensing along a first line of sight, and
a second one of the optical scan units (15) is oriented for optically sensing along a second line of sight angularly displaced with respect to said first line of sight;
wherein said central control unit (50) is separate and spaced apart from the first and second optical scan units (15) and processes the signals transmitted from the optical scan units (15) to determine the information contained in the indicia.

3. A system as in claim 2, wherein said central control unit (50) includes means for digitizing and signals transmitted from the optical scan units (15).

4. A system as in claim 2, wherein each said optical scan unit (15) is configured to nominally scan and sense reflected light with respect to a plane parallel to the direction of movement of said item.

5. A system as in claim 2, wherein said plurality of optical scan units (15) nominally scans and senses reflected light with respect to only four planes, and each said plane is parallel to the direction of movement of said item and orthogonal to the other said planes.

6. A system as in claim 2, further comprising a conveyor (20) for moving the item through said space.

7. A system as in claim 6, wherein
(i) said conveyor (20) is comprised of a first conveyor belt (20a) for carrying the item into said space (100) through which the item will move, and a second conveyor belt (20b), disposed apart from said first conveyor belt (20a) with a separation space therebetween, for carrying the item out of said space (100) through which the item will move, and at least one of the optical scan units (15) has a line of sight through said separation space, and
(ii) said item simultaneously contacts said first conveyor belt (20a) and said second conveyor belt (20b) to move through said space (100).

8. A system as in claim 7, wherein the means (11, 20) for defining said space (100) through which items will move includes a bracket (11) which supports at least some of the plurality of optical scan units (15) and extends from a point alongside the separation space and across the separation space.

9. A system as in claim 2, wherein a common plane substantially perpendicular to a direction of movement of the item is impinged by each of said plurality of scan units (15).

## Patentansprüche

1. System (10) zum Scannen bzw. Abtasten von (Kenn-)Zeichen mit Teilen mit unterschiedlichem Lichtreflexionsvermögen, mit:
einer Vielzahl von optischen Scan- bzw. Abtasteinheiten (15l, 15r, 15t, 15b, 15), wobei jede Scaneinheit (15l, 15r, 15t, 15b, 15) folgendes umfaßt:
(i) erste Lichtaussendemittel (17, 17') zum Aussenden eines ersten Lichtstrahls (27),
(ii) Mittel (18, 19, 21, 23) zum Richten des ersten Lichtstrahls (27) auf die (Kenn-)Zeichen, so daß der erste Lichtstrahl (27) einen ersten Teil der (Kenn-)Zeichen scannt bzw. abtastet, und
(iii) Detektiermittel (33, 33') zum Detektieren von reflektiertem Licht (29) von dem ersten gescannten Teil der (Kenn-)Zeichen, und
zentralen Steuermitteln (50) zum Empfang von Signalen entsprechend dem detektierten reflektierten Licht (29) von jeder der Vielzahl von optischen Scaneinheiten (15l, 15r, 15t, 15b, 15) und zum Verarbeiten der Signale, um durch die (Kenn-)Zeichen repräsentierte Informationen zu bestimmen,
dadurch gekennzeichnet, daß
jede Scaneinheit auch zweite Lichtaussendemittel (17, 17') zum Aussenden eines zweiten Lichtstrahls (27) aufweist, wobei die Wellenlänge des zweiten Lichtstrahls gleich der Wellenlänge des ersten Lichtstrahls (27) ist,
wobei die Mittel zum Richten auch den zweiten Lichtstrahl (27) auf die (Kenn-)Zeichen richten bzw. scannen, so daß der zweite Lichtstrahl einen zweiten Teil der (Kenn-)Zeichen scannt bzw. abtastet, der unterschiedlich ist von dem Teil, welcher durch den ersten Lichtstrahl gescannt wird, und
wobei die Detektiermittel (33, 33') auch reflektiertes Licht von dem zweiten gescannten Teil der (Kenn-)Zeichen detektieren.

2. Scansystem gemäß Anspruch 1, wobei das System ferner folgendes aufweist:
Mittel (11, 20) zum Definieren eines Raums (100), durch den sich der Gegenstand, welcher die (Kenn-)Zeichen trägt, bewegt,
wobei jede optische Scaneinheit (15) Änderungen des Lichtreflexionsvermögens auf der Oberfläche des Gegenstands optisch abtastet bzw. abfühlt, wenn sich der Gegenstand durch den Raum bewegt, und Mittel zum Übertragen der erzeugten Signale umfaßt;
wobei eine erste der optischen Scaneinheiten (15) so ausgerichtet bzw. orientiert ist, daß sie entlang einer ersten Sichtlinie optisch abtastet bzw. abfühlt, und
wobei eine zweite der optischen Scaneinheiten (15) so ausgerichtet bzw. orientiert ist, daß sie entlang einer zweiten Sichtlinie optisch abtastet bzw. abfühlt, die bezüglich der ersten Sichtlinie winkelmäßig versetzt ist bzw. unter einem Winkel angeordnet ist;
wobei die zentrale Steuereinheit (50) von den ersten und zweiten optischen Scaneinheiten (15) getrennt und mit Abstand dazu angeordnet ist und die von den optischen Scaneinheiten (15) übertragenen Signale verarbeitet, um die in den (Kenn-)Zeichen enthaltene Information zu bestimmen.

3. System gemäß Anspruch 2, wobei die zentrale Steuereinheit (50) Mittel zum Digitalisieren der von den optischen Scaneinheiten (15) übertragenen Signale umfaßt.

4. System gemäß Anspruch 2, wobei jede optische Scaneinheit (15) so konfiguriert ist, daß sie nominal bezüglich einer Ebene parallel zur Bewegungsrichtung des Gegenstands scannt und reflektiertes Licht abtastet bzw. abfühlt.

5. System gemäß Anspruch 2, wobei die Vielzahl von optischen Scaneinheiten (15) nominal bezüglich nur vier Ebenen scannt und reflektiertes Licht abtastet bzw. abfühlt, und wobei jede Ebene parallel zu der Bewegungsrichtung des Gegenstands und senkrecht zu den anderen Ebenen ist.

6. System gemäß Anspruch 2, wobei das System ferner eine Fördereinrichtung (20) zum Bewegen des Gegenstand durch den Raum aufweist.

7. System gemäß Anspruch 6, wobei
(i) die Fördereinrichtung (20) aufgebaut ist aus einem ersten Förderband (20a) zum Tragen bzw. Bewegen des Gegenstands in den Raum (100), durch den sich der Gegenstand bewegt, und einem zweiten Förderband (20b), das von dem ersten Förderband (20a) beabstandet ist mit einem Trennraum dazwischen, und zwar zum Tragen bzw. Bewegen des Gegenstands aus dem Raum (100), durch den sich der Gegenstand bewegt, und wobei mindestens eine der optischen Scaneinheiten (15) eine Sichtlinie besitzt, die durch den Trennraum hindurchgeht, und
(ii) der Gegenstand beim Bewegen durch den Raum (100) gleichzeitig mit dem ersten Förderband (20a) und dem zweiten Förderband (20b) in Kontakt steht.

8. System gemäß Anspruch 7, wobei die Mittel (11, 20) zum Definieren des Raums (100), durch den sich der Gegenstand bewegt, einen Bügel (11) umfaßt, der mindestens einige der Vielzahl von optischen Scaneinheiten (15) trägt und sich von einem Punkt an der Seite des Trennraums über den Trennraum hinweg erstreckt.

9. System gemäß Anspruch 2, wobei eine gemeinsame Ebene im wesentlichen senkrecht zu einer Bewegungsrichtung des Gegenstand von jeder der Vielzahl von Scaneinheiten (15) getroffen wird.

## Revendications

1. Système (10) pour balayer des signes ayant des parties présentant des facteurs de réflexion de la lumière différents, comportant :
une pluralité d'unités (15l, 15r, 15t, 15b, 15) de balayage optique, chacune desdites unités (15l, 15r, 15t, 15b, 15) de balayage optique comprenant :
(i) un premier moyen d'émission de lumière (17, 17') destiné à émettre un premier faisceau lumineux (27)
(ii) un moyen (18, 19, 21, 23) pour diriger ledit premier faisceau lumineux (27) vers lesdits signes, de manière que ledit premier faisceau lumineux (27) balaye une première partie desdits signes, et
(iii) un moyen de détection (33, 33') destiné à détecter une lumière réfléchie (29) provenant de la première partie balayée des signes, délivrée par ledit premier moyen d'émission de lumière, et
un moyen de commande central (50) destiné à recevoir des signaux correspondant à une lumière réfléchie détectée (29) provenant de chacune de ladite pluralité d'unités (15l, 15r, 15t, 15b, 15) de balayage optique et à traiter lesdits signaux pour déterminer une information représentée par lesdits signes,
caractérisé en ce que :
- chaque unité de balayage comporte aussi un second moyen d'émission de lumière (17, 17') destiné à émettre un second faisceau lumineux (27) dont la longueur d'onde est égale à la longueur d'onde du premier faisceau lumineux (27),
- ledit moyen destiné à diriger balaye également ledit second faisceau lumineux (27) vers lesdits signes de manière que ledit second faisceau lumineux balaye aussi une seconde partie desdits signes, différente de la partie balayée par le premier faisceau lumineux, et
- ledit moyen de détection (33, 33') détecte également une lumière réfléchie provenant de la seconde partie balayée desdits signes.

2. Système de balayage selon la revendication 1, comportant en outre :
un moyen (11, 20) destiné à définir un espace (100) à travers lequel l'article portant les signes se déplace ;
dans lequel chacune desdites unités (15) de balayage optique capte optiquement des variations du facteur de réflexion de la lumière sur la surface dudit objet pendant que l'objet se déplace à travers ledit espace et comprend un moyen pour transmettre lesdits signaux générés ;
dans lequel une première des unités (15) de balayage optique est orientée pour capter optiquement suivant une première ligne de visée, et
une seconde des unités (15) de balayage optique est orientée pour capter optiquement suivant une seconde ligne de visée décalée angulairement par rapport à ladite première ligne de visée ;
dans lequel ladite unité de commande centrale (50) est séparée et espacée des première et seconde unités (15) de balayage optique et traite les signaux transmis depuis les unités (15) de balayage optique pour déterminer l'information contenue dans les signes.

3. Système selon la revendication 2, dans lequel ladite unité de commande centrale (50) comprend un moyen pour numériser les signaux transmis depuis les unités (15) de balayage optique.

4. Système selon la revendication 2, dans lequel chaque unité (15) de balayage optique est configurée pour nominalement balayer et capter une lumière réfléchie par rapport à un plan parallèle à la direction du mouvement dudit article.

5. Système selon la revendication 2, dans lequel ladite pluralité d'unités (15) de balayage optique balaye et capte nominalement une lumière réfléchie par rapport à seulement quatre plans, et chacun desdits plans est parallèle à la direction du mouvement dudit article et est orthogonale aux autres desdits plans.

6. Système selon la revendication 2, comportant en outre un transporteur (20) pour déplacer l'article à travers ledit espace.

7. Système selon la revendication 6, dans lequel
(i) ledit transporteur (20) est constitué d'une première bande transporteuse (20a) destinée à transporter l'objet jusque dans ledit espace (100) à travers lequel l'objet se déplacera, et d'une seconde bande transporteuse (20b), disposée à distance de ladite première bande transporteuse (20a) avec un espace de séparation entre elles, pour faire sortir l'objet dudit espace (100) à travers lequel l'objet se déplacera, et au moins l'une des unités (15) de balayage optique possède une ligne de visée traversant ledit espace de séparation, et
(ii) ledit objet est en contact simultanément avec ladite première bande transporteuse (20a) et ladite seconde bande transporteuse (20b) pour se déplacer à travers ledit espace (100).

8. Système selon la revendication 7, dans lequel le moyen (11, 20) destiné à définir ledit espace (100) à travers lequel des objets se déplacent comprend une console (11) qui supporte au moins certaines de la pluralité d'unités (15) de balayage optique et s'étend depuis un point le long de l'espace de séparation et à travers l'espace de séparation.

9. Système selon la revendication 2, dans lequel un plan commun sensiblement perpendiculaire à une direction du mouvement de l'objet est atteint par chacune de ladite pluralité d'unités de balayage (15).
